(19) Europäisches Patentamt
European Patent Office
Office européen des brevets

(11) EP 0 824 120 A1

(12) **EUROPEAN PATENT APPLICATION**
published in accordance with Art. 158(3) EPC

(43) Date of publication:
18.02.1998 Bulletin 1998/08

(21) Application number: 95917507.6

(22) Date of filing: 02.05.1995

(51) Int. Cl.$^6$: **C08F 214/22**, C08F 214/28, C08F 214/26

(86) International application number:
PCT/JP95/00869

(87) International publication number:
WO 96/34901 (07.11.1996 Gazette 1996/49)

(84) Designated Contracting States:
DE FR GB IT

(71) Applicant:
E.I. DU PONT DE NEMOURS AND COMPANY
Wilmington Delaware 19898 (US)

(72) Inventors:
• TODA, Keiichi
Oita-shi, Oita 870-01 (JP)

• HAYASHI, Kenichi
Nobeoka-shi, Miyazaki 882 (JP)
• SAITOH, Hiroshi
Chiba-shi, Chiba 264 (JP)

(74) Representative:
Matthews, Derek Peter
Frank B. Dehn & Co.,
European Patent Attorneys,
179 Queen Victoria Street
London EC4V 4EL (GB)

(54) **FLUOROELASTOMER**

(57) A fluoroelastomer having good heat and oil resistance and excellent extrudability and mechanical properties. It is composed of vinylidene fluoride units, hexafluoropropylene units and, occasionally, at most 35 wt.% of tetrafluoroethylene units, contains bound iodine, and has a multi-peak molecular weight distribution. It can be sufficiently vulcanized in the wide range from the low-molecular-weight to the high-molecular-weight components thereof to give a high-strength vulcanizate having a good balance between elongation and strength, and can be improved in compression set because it can be increased in cross-linking density.

EP 0 824 120 A1

## Description

Technical Field

The present invention relates to a novel fluoroelastomer. It further relates to a fluoroelastomer that has good heat resistance, solvent resistance, and chemical resistance and can give a vulcanizate with improved mechanical properties and compression set, and can be suitably used as a material in fuel hoses, filler hoses, seal materials in o-rings, sealing rings, packing, gaskets, and the like, solenoid valves, needle valves, and other industrial valves, and diaphragms, copier blades, contact rolls, or in composite parts with different materials, in particular, as materials in fuel hoses, valves, o-rings, and the like which require chemical resistance and solvent resistance.

Background Technology

Because fluoroelastomers have excellent heat resistance, solvent resistance, chemical resistance, and the like, they have been extensively used in seal materials as in o-rings, oil seals, packing, gaskets, and the like, and in diaphragms, and the like which are used under particularly aggressive conditions.

A variety of cures are known for such fluoroelastomers, for example, polyamine cures, polyol cures, peroxide cures, and the like; and optimum curing methods are selected according to the application. However, in recent applications requiring good moldability such as extrudability, mold flow, and the like, applications for in use as composite materials in combination with other materials, and applications for use under aggressive conditions such as in the presence of methanol and the like, the conventional technologies which cure by the conventional polyol, polyamine cure, or peroxide cures can no longer provide the required performance.

From among these curing methods, the polyamine cure in general gives a low strength vulcanizate with a compression set that tends to be poor, while the polyol cure, which is the most frequently used curing method, gives vulcanizates which are poor in solvent resistance, chemical resistance, alkali resistance, and steam resistance; in addition, these two methods are deficient in that it is difficult to cure a low molecular weight polymer. On the other hand, the peroxide curing method is known to overcome such deficiencies and to give a vulcanizate with relatively good physical properties, but it is deficient in that it gives poor adhesion to metals, which makes it difficult to use it in combination with metals such as in oil seals, valves, and the like; and in that any contact with air during cure results in a considerably slower cure rate, which makes it difficult to remove any flashing developed in molding so that the molds tend to be dirtied, and the like. It is also difficult to cure a high molecular weight polymer, resulting in poor strength or compression set. Several attempts have heretofore been made to solve all the difficulties in these individual vulcanization processes for once and all; for example, processes have been proposed (Japanese Patent Application Kokai S60-72950, 62-30142, 62-30143) which call for example, blending a vinylidene fluoride/hexafluoropropylene/tetrafluoroethylene terepolymer with a tetrafluoroethylene/propylene dipolymer and co-curing with a polyol or a polyamine curative and a peroxide curative.

However, these methods have been deficient in that the vulcanization reaction occurs with difficulty because the vulcanization reaction involves neither a deiodination radical reaction nor debromination radical reaction.

A process has also been proposed (Kokai S62-79251), which calls for using a combination of a polyol cure compounding agent and a peroxide cure compounding agent with a blend of a bromine-containing vinylidene fluoride/hexafluoropropylene/tetrafluoroethylene terepolymer and a tetrafluoroethylene/propylene dipolymer.

However, the process uses bromine as a cure site and the bromine is removed with difficulty so that the cure rate is slow and the process does not necessarily provide satisfactory vulcanizate properties. A proposal has been made (Kokai S61-244545) for a laminate of a fluoroelastomer to an NBR, compounded with a combination of a polyol vulcanization compounding agent and a peroxide vulcanization compounding agent in the fluoroelastomer so as to improve the adhesion of the fluoroelastomer to the NBR. However, said laminate does not specify the fluoroelastomer nor does it improve the processability, the roll stickiness, and the like.

It is an object of this invention to provide a fluoroelastomer which overcomes the above prior art deficiencies possessed by the conventional polyamine cure, polyol cure, and peroxide cure, which is capable of providing a vulcanizate with improved mechanical properties such as strength and compression set, good chemical resistance, and solvent resistance, particularly substantial improvement in resistance to methanol extractability, and further, which provides good metal adhesion, which makes it easy to remove any flashing on molding, thereby is resistant to dirtying the mold; which can further fully cure simultaneously both the low and high molecular weight components; and which has excellent processability particularly, extrudability.

Disclosure of the Invention

Intensive studies by the present inventors of a way to develop a fluoroelastomer having such outstanding properties led to the discovery that the objective can be met by a fluoroelastomer having a specific molecular weight distribution and containing bound iodine; the discovery resulted in completion of this invention.

That is, the present invention provides a fluoroelastomer characterized in that it comprises (a) vinylidene fluoride units and (b) hexafluoropropylene units, (c) optionally with not more than 35% by weight of tetrafluoroethylene units, where the ratio by weight of units (a) to units(b) is 40:60 to 80:20, and contains bound iodine, wherein

A) it has a multi-peak type molecular weight distribution;

B) it has an inherent viscosity of 100-170ml/g;

C) the ratio of a low molecular weight polymer thereof having a molecular weight of not more than 50,000 ($M_5$) (% by weight) to the inherent viscosity number $[\eta]$, $M_5/[\eta]$, is 0.25-0/60;

D) the ratio of the weight average molecular weight ($M_w$) to the number average molecular weight ($M_n$), Mw/Mn, is 10-25;

E) it has less than 15% of a lower molecular weight polymer fraction having a molecular weight of not more than 10,000 ($M_1$) (% by weight); and

F) it has an Mw/Mn for a high molecular weight side peak of 1.2-3.0.

Brief Description of the Drawing

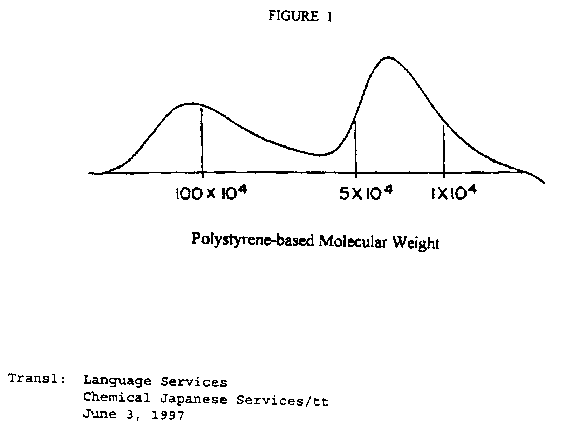

Figure 1 is a graph illustrating an example of the molecular weight distribution of a fluoroelastomer of this invention.

Best Mode to Carry Out the Invention

The fluoroelastomer of this invention is a fluoroelastomer comprising vinylidene fluoride (hereafter abbreviated as VdF) units, hexafluoropropylene(abbreviated hereafter HFP) units, and optionally tetrafluoroethylene (hereafter abbreviated as TFE)units, and it is necessary in the fluoroelastomer that the ratio of the VdF units to the HFP units by weight is in the range of 40:60-80:20. Having a level of VdF units less than the above range will make the rate of polymerization extremely slow and will make it difficult to obtain a high molecular weight product, while a level greater than the above range will give a resin-like fluoroelastomer that tends to have reduced elasticity.

It is necessary for a 3-component fluoroelastomer containing tetrafluoroethylene to have a TFE unit content of not more than 35% by weight, preferably a content in the range of 5-25% by weight; a content exceeding 35% by weight will tend to give a fluoroelastomer with decreased elasticity. The preferred ratio of the VdF to HFP units is selected from the range of 55:45-75:25 in a 2-component fluoroelastomer containing no TFE units; and the weight ratio is selected in the range from 45:55-70:30 for a 3 component fluoroelastomer containing TFE units. The 2-component fluoroelastomer is used in applications which require a low fluorine content (not more than 65% by weight) and the 3 component fluoroelastomer is used in applications requiring a high fluorine content (67% by weight or greater) such as in automotive parts, chemical apparatus parts, and so on, that require oil resistance and chemical resistance.

The fluoroelastomer needs to have a multi-peak type molecular weight distribution having 2 or more peaks. Having a multi-peak type permits the high molecular weight component mostly to provide for the desired physical properties and the low molecular weight component to provide good processability. It is very difficult to satisfy simultaneously both the physical properties and the processability in this manner with a 1-peak type elastomer, which has a single peak in molecular weight distribution.

The fluoroelastomer preferably has a specific molecular weight distribution. Elastomers in this invention having specific molecular weight distributions and specific weight ratios of specific molecular weight components show excellent extrudability and roll processability (roll non-stickiness) as well as excellent vulcanizate properties and resistance to solvent extraction.

Therefore, in addition to the need for the fluoroelastomer of this invention to have a multi-peak type molecular weight distribution, it is also necessary for the inherent viscosity to be 100-170 ml/g; for the ratio of a low molecular weight polymer having a molecular weight of not more than 50000 (M5) (% by weight) to the inherent viscosity number $[\eta]$, M5/$[\eta]$, to be 0.25-0.60, for the ratio of the weight average molecular weight (Mw) to the number average molecular weight (Mn), Mw/Mn to be 10-25, for the proportion of a low molecular weight polymer having a molecular weight of not more than 10000 (M1) to be less than 15% by weight, and for the Mw/Mn of the high molecular weight side peak to be 1.2-3.0.

That is, it is necessary for the fluoroelastomer of this invention to have the ratio of the weight average molecular weight (Mw) to number average molecular weight (Mn), Mw/Mn to be in the range of 10-25; a Mw/Mn ratio less than 10 has a less broad molecular weight distribution, resulting in inferior extrudability such as in extrusion rates and extrudate surface [smoothness], while a ratio exceeding 25 will have increased amounts of super high molecular weight polymer and extremely low molecular weight polymer, which tends to worsen die swell in extrusion. The preferred Mw/Mn is in the range of 14-20.

It is necessary for the inherent viscosity number $[\eta]$, which is an indication of molecular weight, to be in the range of 100-170ml/g, preferably 100-140ml/g. This is because the stickiness during roll milling will become too high if the inherent viscosity number falls below 100ml/g, while a number exceeding 170 ml/g will mean too high a molecular weight, with reduced flow and difficulty in achieving good extrusion.

It is necessary for the ratio of a low molecular weight polymer having a molecular weight of less than 50000, ($M_5$) (% by weight), to the inherent viscosity number $[\eta]$ (ml/g), $(M_5)/[\eta]$, to be in the range of 0.25-0.60, preferably 0.30-0.50. Increasing $M_5$ tends to improve extrusion rates and extrudate surface while increasing $[\eta]$ will reduce both the extrusion rate and extrudate surface smoothness. Therefore, it is necessary to have the $M_5/[\eta]$ to be in the above range for good extrudability. Having a ratio $M_5/[\eta]$ less than 0.25 makes it difficult to extrude, considerably worsening the extrusion rate or extrudate surface while a ratio exceeding 0.60 will decrease green strength, which tends to be variable during extrusion, giving a vulcanizate with lowered mechanical strength.

It is necessary for the amount of a low molecular weight polymer having a molecular weight of not more than 10000, $M_1$, to be less than 15% by weight, preferably not more than 12% by weight. The ($M_1$) is related to the amount extracted into the solvent when dipped in a solvent such as methanol; the higher the $M_1$, the greater the amount extracted by the solvent. Therefore, an $M_1$ level less than 15% by weight can maintain the amount extracted to a level low enough to be free from problems in practice.

It is necessary for the ratio of the weight average molecular weight (Mw) and the number average molecular weight (Mn) for a peak belonging to a high molecular weight peak which is a peak molecular weight of 50000 or greater, Mw/Mn, to be in the range of 1.2-3.0, preferably 1.2-2.5. An Mw/Mn ratio exceeding 3.0 will increase the amount of super high molecular weight polymer, which reduces extrudability. Therefore, in order to have good extrudability, it is necessary to increase the low molecular weight component, the increase of which however, will increase the amount extracted into a solvent when a vulcanisate is dipped in a solvent, resulting in reduced solvent resistance. Therefore, it is necessary to have a peak polymer weight average molecular weight (Mw) and number average molecular weight (Mn), such that their ratio, Mw/Mn is not more than 3.0 for satisfying both the extrudability and solvent resistance. It is difficult to manufacture a polymer with an Mw/Mn ratio less than 1.2 at the current state of polymerization technology.

It is necessary for the fluoroelastomer of this invention to have bound iodine in the molecular chain. The iodine is readily eliminated during the cure to generate a radical on the polymer chain and the radical becomes a cross-linking site. Such a fluoroelastomer in which iodine readily eliminates gives a shorter cure time and higher degree of cross-linking than a bromine-bound polymer, thereby giving also improved vulcanizate physical properties.

A process is known to introduce iodine into a polymer chain by copolymerizing an iodine-containing vinyl compound, but it is more effective and advantageous to use an iodine compound as a chain transfer agent (Japanese Patent Application Kokai S53-125491; 60-221409). This approach can readily introduce iodine into a molecular chain end. The chain transfer agents which may be used include for example, monoiodomethane, monoiodoethane, 1-iodo-n-propane, isopropyl iodide, diiodomethane, 1, 2-diiodoethane, 1,3-diiodo-n-propane and perfluoroiodo compounds obtained by replacing all the hydrogen atoms in these compounds with fluorine atoms. The iodine content of the polymer is selected normally from the range of 0.01-5% by weight, preferably the range of 0.1-2.5% by weight with respect to the total amount of VdF units, HFP units, TFE units, and iodine. If this amount is less than 0.01% by weight, the length between the [adjacent]cross-linked sites will be too long, giving insufficient cross-linking and making it difficult to obtain a vulcanizate with satisfactory physical properties, while a level exceeding 5% by weight will have a short length between the cross-linked sites, that will make it difficult to obtain highly satisfactory elastomer physical properties.

The multi-peak type fluoroelastomer in this invention can be manufactured for example, by blending a separately manufactured high molecular weight polymer and low molecular weight polymer, but it is preferred to use a method of incrementally adding a chain transfer agent to a polymerization system by suspension polymerization in that it gives a polymer having a multi-peak type molecular weight distribution with relatively sharp peaks. In this case, the process calls for first preparing a high molecular weight polymer having a peak on a high molecular weight side and then adding a chain transfer agent and optionally a polymerization catalyst to generate a low molecular weight polymer having a peak on a low molecular weight side. It is preferred to use [one of ] the aforementioned iodine compounds as a chain transfer agent. A suitable example of the suspension polymerization process is described as follows: an inert organic solvent in which the desired mixed monomers (feed monomers) are dissolved is dispersed in an aqueous medium, followed by adding a suspension stabilizer and an oil soluble catalyst, optionally the aforementioned chain transfer agent, mechanically stirring to maintain the temperature, preferably at 50-60°C, adding the aforementioned mixed monomers (incremental monomers) afresh so as to maintain the pressure constant, preferably in the range of 5-17kg/cm$^2$ G, thereby permitting polymerization to progress. The composition of the monomer units in the resultant fluoroelastomer is determined by the composition of feed monomers and the composition of incrementally added monomers. The composition of the feed monomers and composition of the incrementally added monomers are determined by gas chromatography, and the composition of the monomer units in the fluoroelastomer by $^{19}$F-NMR using an acetone solution of said elastomer. Addition of the aforementioned chain transfer agent during the course of polymerization permits adjusting the molecular weight distribution or the amount of iodine introduced therein.

The inert organic solvents used in the suspension polymerization are organic solvents free of carbon-hydrogen bonds that are liable to cause radical chain transfer, where 1, 1, 2-trichloro-1, 2, 2-trifluoroethane is preferred in terms of performance and economics. The preferred suspension stabilizer is methyl cellulose. The oil soluble catalyst is preferably a dialkylperoxy dicarbonate such as diisopropylperoxy dicarbonate and the like, because they have high decomposition temperatures.

Vulcanization of the fluoroelastomer of this invention uses a polyol cure, a polyamine cure, or a peroxide cure; particularly a combined use of a peroxide cure with a polyol cure or polyamine cure provides advantages in that it improves mechanical properties such as strength and compression set and improves chemical resistance, solvent resistance, particularly providing substantial improvement in resistance to methanol extraction, in addition, it increases metal adhesion, it makes it easy to remove flashing in molding, it gives resistance to mold dirtying, and at the same time, it allows both the low molecular weight and high molecular weight components to be fully cured.

The polyol cure uses a polyhydroxy aromatic compound as a cross-linking agent along with a cure accelerator selected from at least one kind from ammonium salts, phosphonium salts, iminium salts and at least 1 acid acceptor selected from divalent metal oxides and divalent metal hydroxides as compounding agents.

The aforementioned polyhydroxyl compounds include for example, hydroquinone, 2, 2-bis(4-hydroxy phenyl) propane (bisphenol A) 2, 2-bis (4-hydroxy phenol) perfluoropropane (bisphenol AF), 4, 4'-dihydroxy diphenyl methane, 2, 2-bis (4-hydroxy phenyl) butane, and the like, being used normally at a ratio of 0.1-10 parts by weight, preferably o.6-5 parts by weight per 100 parts by weight of the fluoroelastomer. These polyhydroxy aromatic compounds may be used alone or in combinations of 2 or more.

The ammonium salts, phosphonium salts, iminium salts include suitably for example, tetramethylammonium chloride, tetryethylammonium chloride, tetrapropylammonium chloride, tetrabutylammonium chloride, tetrabutylammonium bromide, bisbenzyldiphenylphosphin)iminium chloride (sic) , tetrabutylphosphonium chloride, benzyltriphenyl-phosphonium chloride, benzyltrioctylphosphonium chloride, and the like, being used at a ratio normally of 0.05-2 parts by weight, preferably 0.1-1 part by weight per 100 parts by weight of the fluoroelastomer. These may be used alone or in combinations of 2 or more.

The divalent metal oxides or metal hydroxides include, for example, oxides or hydroxides of magnesium, calcium, zinc, lead, and the like, being used in an amount selected normally from the range of 1-30 parts by weight, preferably 2-20 parts by weight per 100 parts by weight of the fluoroelastomer. These may be used singly or in combinations of 2 or more.

Optionally, a variety of cure acceleration activators may be added in order to enhance the effect of the cure accelerators. Typical cure accelerator activators include sulfone compounds such as dimethyl sulfone, dichlorodiphenyl sulfone, and the like.

The polyamine cure uses compounding agents comprising a polyamine compound as a cross-linker and a divalent metal oxide acid acceptor. The polyamine compounds include for example, hexamethylene diamine carbonate, N, N'-cinnamylidene 1, 6-hexamethylene diamine, 4, 4'-bis(aminocyclohexyl)methane carbonate, and the like, being used at a rate normally of 0.1-10 parts by weight, preferably 0.5-5 parts by weight per 100 parts by weight of the fluoroelastomer. These polyamine compounds may be used alone or in combinations of 2 or more.

The divalent metal oxides for example, include oxides of magnesium, calcium, zinc, lead, and the like, being used in an amount selected from the range normally 1-30 parts by weight, preferably 5-20 parts by weight per 100 parts by weight of the fluoroelastomer. These may be used alone or in combinations of 2 or more.

If both a polyol cure and a polyamine cure are used in combination, it is preferred to compound per 100 parts by weight of the fluoroelastomer, 0.1-5 parts by weight of a polyhydroxy aromatic compound, 0.05-2 parts by weight of a salt selected from ammonium salts, phosphonium salts, and iminium salts, 0.1-5 parts by weight of a polyamine compound, and 1-40 parts by weight of a compound selected from the divalent metal oxide and divalent metal hydroxides.

The peroxide cure is carried out in the presence of an organic peroxide which readily generates a peroxy radical with heat, for example, a dialkyl peroxide such as 2, 5-dimethyl-2, 5-di(t-butyl peroxy hexyne-3, 2-5-dimethyl 2, 5-di t-butyl peroxy(hexane,) and the like. The organic peroxide may be used alone or in a combination of two or more.

It is postulated that these organic peroxides generate radicals with heat during the curing and the radical reacts with the iodine in the polymer, which in turn generates a radical in the polymer; coupling of these 2 radicals in the polymer accomplishes a cross-linking. The amount of the organic peroxide added, which depends on the amount of active oxygen or decomposition temperature, is normally used in an amount selected from range of 0.05-10 parts by weight, preferably 0.05-5 parts by weight per 100 parts by weight of the fluoroelastomer. An amount less than 0.05 parts by weight will generate too small an amount of radical so that the cross-linking does not fully take place while an amount exceeding 10 parts by weight does not show the improved effects for the amount and is economically disadvantageous; in addition, the degradation gas from the peroxide will lead to a sponging which then tends to give decreased mechanical properties.

In order to more effectively advance the cross-linking reaction, a polyfunctional unsaturated compound may be used, where useful polyfunctional unsaturated compounds include for example, triallyl cyanurate, triallyl isocyanurate, tris(diallylamine)-s-triazine and the like, preferably, triallyl isocyanurate.

These polyfunctional unsaturated compounds may be used alone or in combination of 2 or more. The amount compounded is selected normally from the range of 0.01-10 parts by weight, preferably 0.1-5 parts by weight for 100 parts by weight of the elastomer.

In order to prevent crack formation when [a vulcanizate] is dipped in solvent, the so-called "solvent cracking," [text reads "solvent crack"], it is preferred to compound, per 100 parts by weight of the fluoroelastomer, 0.05-0.6 parts by weight, preferably 0.05-0.4 parts by weight of an organic peroxide and 0.01-1.5 parts by weight, preferably 0.01-1.0 parts by weight of a polyfunctional unsaturated compound. The amount of the polyhydroxy aromatic compound compounded in this case is 0.5-3 parts by weight, preferably 1.0-2.5 parts by weight; the amount of a salt selected from ammonium salts, phosphonium salts, and iminium salts, to be compounded is 0.1-1.0 parts by weight, preferably 0.2-0.75 parts by weight.

The fluoroelastomer of this invention can be used in a variety of applications as a composition after an optional addition of various additives such as a reinforcing agent such as carbon black, silica, clay, talc, or the like, a process aid such as wax or the like. Such fluoroelastomer compositions can be prepared by mixing and milling these additive components on mills or by a Banbury mixer.

The resultant composition after a full milling, is sheeted out and processed with an extruder to give tubing or noncircular cross-section rod type products. It can also be molded by injection molding, press molding, calendering, or the like. Then as needed, a post cure is carried out to obtain the desired vulcanizate.

The fluoroelastomer of this invention contains bound iodine, and the iodine in view of the mechanism of polymerization, is mostly bound to an end of a molecule so that the terminal iodine during a curing is eliminated by the organic peroxide; the polymer couples through its ends via a polyfunctional unsaturated compound; the polyol curative or polyamine curatives cross-link between polymer chains, thereby fully curing from the low molecular weight components to the high molecular weight components, resulting in a high strength and in physical properties with an excellent balance in strength and elongation. Since the cross-link density increases, the compression set is improved. The process permits curing an extremely low molecular weight polymer that cannot be cured by a polyol cure or polyamine cure so that the vulcanizate will show a substantial increase in solvent resistance, particularly resistance to methanol extraction.

The conventional polyol cure or polyamine cure results in connecting cross-linking sites through carbon and oxygen or carbon and nitrogen so that their chemical resistance is poor, but the present invention involves reinforcing by network chains formed by carbon-carbon bonds by peroxide cures so that the chemical resistance is also improved. The conventional peroxide cure suffers from difficulty in advancing the vulcanization reaction when in contact with air so that flash portions in contact with air are insufficiently cured, making them difficult to remove, instead adhering to the mold to cause a dirtying. On the other hand, the present invention fully cures by the polyol curative or polyamine curative including areas in contact with air so that the flashing is easily removed and the mold is not dirtied.

Since the present invention is a fluoroelastomer having a specific molecular weight distribution, it offers outstanding processability, particularly extrudability, gives excellent vulcanization properties, is free of roll sticking, and provides a very good working efficiency, thus excellent productivity performance. The product has at least 2 peaks, from a low molecular weight component and a high molecular weight component; and using an iodine-containing elastomer in the low molecular weight component enables the low molecular weight component to provide excellent processability while the high molecular weight component maintains excellent vulcanizate properties. In addition, the low molecular weight component is linked together by iodine in the molecule during the cure so that there is no reduction in vulcanizate properties. The vulcanizates exhibit excellent resistance to solvent extraction when dipped in a solvent or fuel oil, where the low molecular weight component resist extraction.

Therefore, the fluoroelastomer of this invention can be suitably used as a material in parts or components which are required to be resistant to heat, solvent, and fuel oil as in fuel hoses or automotive engine compartment parts or in those which are continuously processed by extrusion or those difficult to process because of complex shapes. It is suitably used as a molding material for injection molding, calendering, compression molding, and the like.

The present invention is further described in detail by the following examples, but invention is in no way limited to these examples:

Physical properties of fluoroelastomers and properties and processability of vulcanizates were determined by the following methods:

1) Inherent viscosity: measured at 35°C, using a capillary viscometer with a solution at the concentration of 0.1g/100ml of

methylethylketone solvent. 2) Molecular weight distribution: this was measured using a liquid chromatograph LC-38 model [manufactured by Shimadzu Seisakusho KK] having columns of KF-80n (2 columns) + KF-800p (pre-column) [manufactured by Showa Denko KK] equipped with an ERC 7510S [manufactured by Elmo Kogaku KK] as a detector, 7000A integrator [manufactured by System Instruments KK] and tetrahydrofuran as a developing solvent under conditions of a concentration of 0.1% by weight and a temperature of 35°C. The standard polymers used for molecular weight calibration curves were mono-dispersed polystyrenes [manufactured by Toyo Soda KK] [Mw/Mn = 1.2 (max)]

The Mw/Mn of a high molecular weight component was calculated by separating the peaks in a GPC chromatcgram and selecting the molecular weight distribution of the high molecular weight component to give a calculated Mw/Mn value. Peak separation was obtained by a non-linear least squares method assuming a Gaussian distribution for each peak.

3) Iodine content of the polymer: this was measured by a fluorescence X-ray method using a polymer dissolved in acetone.

4) Vulcanizate mechanical properties: A fluoroelastomer [compounding] composition having the desired compounding ratios was prepared by milling, press- cured in a mold, removed from the mold, and oven cured, to generate a 2mm thick vulcanizate sheet. No. 3 dumbbell test pieces were punched out from the sheet, on which mechanical properties were measured at a rate of separation of 50cm/min. using a tensile tester [manufactured by Too Seiki KK] according to JRSK6301.

5) Resistance to methanol extraction. A 2mm thick sheet was cut up into pieces about 5mm x 5mm square and this piece was dipped for 48 hours at 65°C or for 288 hours at 50°C in methanol, followed by vaporizing the extract to dryness to measure the amount extracted, thereby determining resistance to methanol extraction.

6) Roll stickiness: a 6 inch roll mill was used on which a raw elastomer or an elastomer compounded with a curative was banded around to evaluate the ease of de-banding.

7) Hardness: measured using a spring-type hardness gauge A according to JIS-K6301.

8) Extrusion test: this was tested using an extruder 10DW model where D = 19.1mm, L/D = 10 (manufactured by Brabender Company and a tube die OD 9mm and ID 8mm) under conditions of a screw temperature of 60°C, head temperature of 100°C, screw rotation speed of 50rpm.

The extrudate surface was rated in 5 steps (decreasing order from 5 to 1) for the fineness of the surface skin by visual inspection. The extrusion rate was measured from the extrusion length per unit time; die swell was calculated from the tube outside diameter (OD) and thickness.

$$\text{Die [OD] swell} = [(\text{tube OD}) - (\text{die OD})]/(\text{die OD}) \times 100\%$$

$$\text{Thickness swell} = [(\text{tube thickness}) - (\text{die clearance})]/(\text{die clearance}) \times 100\%$$

An about 50l volume capacity autoclave equipped with an electromagnetic induction type stirrer was thoroughly sparged with nitrogen gas, followed by evacuation/nitrogen filling for 3 times, filled with nitrogen and then charged with 23.63l of vacuum de-oxygenated pure water and 2.96l of 1, 1, 2-trichloro-1, 2, 2-trifluoroethane (hereafter Flon 113) and 23.6g of methyl cellulose (viscosity 50cp) as a suspension stabilizer, stirred at 480rpm and held at a temperature of 50°C. This was followed by charging a feed gas of mixed monomers consisting of 14.5% by weight of VdF, 79.1% by weight of HFP, and 6.4% by weight of TFE, until a pressure of $15kg/cm^2$.G was reached. Then 56.95g of a Flon 113 solution containing 20.1% by weight of diisopropylperoxy dicarbonate as a catalyst, was fed to initiate polymerization. As the pressure dropped to $14.5kg/cm^2$.G by polymerization, mixed monomers were added incrementally as an incrementally added gas component consisting of 43.5% by weight of VdF, 29.5% by weight of HFP, and 27.0% by weight of TFE to revert the pressure to $15kg/cm^2$ G. Such an operation was repeated to carry out the polymerization reaction.

6.25 hours after the start of the polymerization, 235g of diiodomethane was added, followed by adding 56.95g of a Flon 113 solution containing 20.1% by weight of diisopropylperoxy dicarbonate to permit the polymerization reaction to proceed further for 12.25 hours under a pressure of $14.5$-$150kg/cm^2$ G in a similar manner to carry out a total of 18.5 hours polymerization reaction. After the end of the polymerization reaction, the remaining mixed monomers were purged off; the resultant suspension was de-watered by a centrifuge, followed by thoroughly water washing and vacuum drying at 100°C to give about 26.87kg of an elastomer. The resultant fluoroelastomer was analyzed by $^{19}$F-NMR, which had 43.5% by weight of VdF units, 30.3% by weight of HFP units, and 26.2% by weight of TFE units as well as bound iodine. The elastomer had an $[\eta]$ of 124ml/g and had a curve shape for its molecular weight distribution as given in Figure 1 with 2 peaks with Mn = $2.9 \times 10^4$, Mw/Mn = 17.2, $M_5$ = 49.9% by weight, $M_5/[\eta]$ = 0.40, the Mw/Mn of the high molecular weight component = 2.1; $M_{200}$ [sic]= 6.8% by weight, and $M_1$ 7.8% by weight. Table 2 shows the physical properties of this product.

Example 2-6 in Comparative Example 1

Elastomers were manufactured by operating in a manner similar to that of Example 1, using the polymerization conditions given in Table 1. Table 2 shows the physical properties of the resultant elastomers. For reference, Tables 1 and 2 also show the polymerization conditions and physical properties of Example 1. For the purpose of comparison, Table 2 shows the physical properties of DAIEL G-555 (trade name) manufactured by Daikin Kogyo KK as an example of a

Table 1

| Examples | Autoclave Capacity (l) | Stirring Speed (rpm) | Polymeri-zation Pressure (kg/cm² G) | Pure Water Fed (l) | Flon Fed (l) | Methyl Cellulose (g) | Feed Composition (VdF/HFP/TFE (wt %) | Incrementally Added Composition (VdF/HFP/TFE (wt %) | Initiator[1] (g) | Diiodo-methane (g) | When diiodo-methane was added | Total polymerization time (hr) | Elastomer weight (kg) |
|---|---|---|---|---|---|---|---|---|---|---|---|---|---|
| Example 1 | 50 | 480 | 15.0-14.5 | 23.63 | 2.96 | 23.6 | 14.5/79.1/6.4 | 43.5/29.5/27.0 | initial 56.95 incremental 56.95 | 235 | 6.3 hrs later | 18.5 | 26.9 |
| Example 2 | 50 | 480 | 15.0-14.5 | 23.63 | 2.96 | 23.6 | 14.6/79.1/6.3 | 43.5/29.5/27.0 | initial 56.95 incremental 56.95 | 329 | 6.3 hrs later | 24.5 | 26.2 |
| Example 3 | 50 | 480 | 15.0-14.5 | 23.63 | 2.96 | 23.6 | 14.6/79.1/6.3 | 43.5/29.5/27.0 | initial 69.50 incremental 46.34 | 238 | 5.7 hrs later | 16.3 | 24.3 |
| Example 4 | 50 | 480 | 15.0-14.5 | 23.63 | 2.96 | 23.6 | 14.6/79.1/6.3 | 43.5/29.5/27.0 | initial 86.90 incremental 144.8 | 342 | 6.0 hrs later | 13.0 | 32.8 |
| Example 5 | 15 | 600 | 15.0-14.5 | 5.44 | 0.68 | 5.4 | 12.3/83.0/4.7 | 43.5/29.5/27.0 | initial 6.75 incremental 20.2 | 33.5 | 6.8 hrs later | 14.5 | 3.1 |
| Example 6 | 15 | 600 | 15.0-14.5 | 5.44 | 0.68 | 5.4 | 14.5/79.2/6.3 | 43.5/29.5/27.0 | initial 26.95 incremental 0 | 32.8 | 5.5 hrs later | 12.3 | 5.2 |
| Compara-tive Example 1 | 15 | 600 | 15.0-14.5 | 5.44 | 0.68 | 5.4 | 14.6/79.1/6.3 | 43.5/29.5/27.0 | initial 3.8 incremental 23.2 | 56.8 | 11.5 hrs later | 23.7 | 5.9 |

Note 1:  The amount of initiator listed is the weight of a Flon 113 solution containing 20.1% by weight of diisopropoxyperoxy arbonate.

Note 2:  The initial addition of the initiator was made at the start of polymerization and the incremental addition was immediately after addition of diiodomethane.

Table 2

| Elastomer | Polymer Composition VdF/HFP/TFE (wt %) | $[\eta]$ (ml/g) | Mn (x10$^4$) | Mw/Mn | M$_3$ (wt %) | M$_3$/$[\eta]$ | High Molecular Weight Component (Mw/Mn) | M$_1$ (wt %) | Shape of Molecular Weight Distribution | Presence of Iodine |
|---|---|---|---|---|---|---|---|---|---|---|
| Example 1 | 43.5/30.3/26.2 | 124 | 2.9 | 17.2 | 49.9 | 0.40 | 2.1 | 7.8 | 2 peaks | Yes |
| Example 2 | 43.7/29.3/27.0 | 118 | 2.2 | 21.1 | 56.1 | 0.48 | 2.2 | 11.4 | 2 peaks | Yes |
| Example 3 | 43.7/29.3/27.0 | 157 | 2.9 | 18.9 | 46.4 | 0.30 | 2.3 | 8.0 | 2 peaks | Yes |
| Example 4 | 43.7/29.3/27.0 | 154 | 3.2 | 20.1 | 42.7 | 0.28 | 2.3 | 7.3 | 2 peaks | Yes |
| Example 5 | 43.7/29.3/27.0 | 111 | 2.6 | 170 | 560 | 0.51 | 2.4 | 8.6 | 2 peaks | Yes |
| Example 6 | 43.5/31.9/24.6 | 105 | 4.3 | 11.3 | 34.6 | 0.33 | 2.3 | 4.2 | 2 peaks | Yes |
| Comparative Example 1 | 44.1/29.2/26.7 | 156 | 3.1 | 25.8 | 55.7 | 0.36 | 2.5 | 8.6 | 2 peaks | Yes |
| Commercial Product | 44.1/29.3/26.6 | 81 | 2.3 | 22.7 | 49.1 | 0.61 | 3.5 | 13.0 | 2peaks | Yes |

Reference Examples 1-3

Fluoroelastomers obtained in Examples 5 and 6 and Comparative Example 1 were used to prepare the following compositions, on which extrusion rates and extrudate surfaces were measured. Vulcanizate sheets were also prepared from them, on which tensile tests and methanol extraction tests were carried out. Stickiness was evaluated on raw rubbers. The results are given in Table 3.

Table 3

| Reference Examples | Elastomers Used | Extrusion Rate (cm/min) | Extrudate Surface | Die Swell (OD/ thickness) | Tensile Strength at Break (kg/cm$^2$) | Elongation (%) | 100% Modulus (kg/cm$^2$) | Hardness (JIS-A) | Roll Stickiness | Amount Extracted By Methanol (wt %) |
|---|---|---|---|---|---|---|---|---|---|---|
| 1 | Example 5 | 124 | 4.5 | 35/20 | 136 | 415 | 22 | 70 | none | 2.3 |
| 2 | Example 6 | 74 | 4.5 | 29/12 | 183 | 340 | 30 | 74 | none | 1.4 |
| 3 | Comparative Example 1 | 125 | 4.5 | 40/42 | 130 | 500 | 23 | 72 | yes | 2.7 |
| 4 | Commercial Product | 145 | 4 | 39/42 | 138 | 300 | 28 | 73 | yes | 3.2 |

| Components | Amounts Compounded (parts by weight) |
|---|---|
| Fluoroelastomer | 100 |
| SRF carbon [Asahi Carbon KK Product "Seast S"] | 12 |
| CA(OH)2 ["Karubitto" (phonetic translation), a product of Ohmi Kagaku Kogyo KK] | 6 |
| MgO (I) ["Kyomagu 150", a product of Kyowa Kagaku Kogyo] | 3 |
| Bisphenol AF | 2 |
| Bis(benzyl Diphenyl Phospine) Iminium Chloride | 0.5 |
| 2, 5-dimethyl-2, 5-di(t-butyl peroxy) hexane ("Perhexa 25 B-40" 40% active ingredient, a product of Nippon Yushi KK] | 0.5 |
| Triallyl isocyanurate | 0.5 |

Reference Example 4

The following compositions were prepared using a commercial fluoroelastomer and cured under the same conditions as given in Reference Examples 1-3. Table 3 shows the physical properties of the vulcanizate sheet.

| Components | Amounts Compounded (parts by weight) |
|---|---|
| Fluoroelastomer | 100 |
| SRF carbon [Asahi Carbon KK Product "Seast S"] | 15 |
| CA(OH)$_2$ ["Karubitto" (phonetic translation), a product of Ohmi Kagaku Kogyo KK] | 6 |
| MgO (I) ["Kyomagu 150", a product of Kyowa Kagaku Kogyo] | 3 |

The above results clearly indicate that compared to the commercial product, the fluoroelastomers of this invention are free of roll-stickiness and show low methanol extraction.

**Claims**

1. A fluoroelastomer characterized in that it comprises (a) vinylidene fluoride units and (b) hexafluoropropylene units, (c) optionally with not more than 35% by weight of tetrafluoroethylene units, where the ratio by weight of units (a) to units (b) is from 40:60 to 80:20, and contains bound iodine, wherein

   A) it has a multi-peak type molecular weight distribution;
   B) it has an inherent viscosity of 100-170ml/g;
   C) the ratio of a low molecular weight polymer thereof having a molecular weight of not more than 50,000 ($M_5$) (% by weight) to the inherent viscosity number $[\eta]$, $M_5/[\eta]$, is 0.25-0/60;
   D) the ratio of the weight average molecular weight ($M_w$) to the number average molecular weight ($M_n$), Mw/Mn, is 10-25;
   E) it has less than 15% of a lower molecular weight polymer fraction having a high molecular weight of not more than 10,000 ($M_1$)(% by weight); and
   F) it has an Mw/Mn for a high molecular weight side peak of 1.2-3.0.

FIGURE 1

$100 \times 10^4$     $5 \times 10^4$   $1 \times 10^4$

Polystyrene-based Molecular Weight

Transl:  Language Services
Chemical Japanese Services/tt
June 3, 1997

## INTERNATIONAL SEARCH REPORT

| | International application No. |
|---|---|
| | PCT/JP95/00869 |

**A. CLASSIFICATION OF SUBJECT MATTER**

Int. Cl$^6$   C08F214/22, C08F214/28, C08F214/26

According to International Patent Classification (IPC) or to both national classification and IPC

**B. FIELDS SEARCHED**

Minimum documentation searched (classification system followed by classification symbols)

Int. Cl$^6$   C08F214/00-214/28

Documentation searched other than minimum documentation to the extent that such documents are included in the fields searched

| | |
|---|---|
| Jitsuyo Shinan Koho | 1926 - 1995 |
| Kokai Jitsuyo Shinan Koho | 1971 - 1995 |
| Toroku Jitsuyo Shinan Koho | 1994 - 1995 |

Electronic data base consulted during the international search (name of data base and, where practicable, search terms used)

WPI/L

**C. DOCUMENTS CONSIDERED TO BE RELEVANT**

| Category* | Citation of document, with indication, where appropriate, of the relevant passages | Relevant to claim No. |
|---|---|---|
| X | JP, 6-279547, A (Asahi Chemical Industry Co., Ltd.), October 4, 1994 (04. 10. 94), Claim & EP, 434046, A1 & US, 5218026, A | 1 |
| Y | JP, 2-160810, A (Asahi Chemical Industry Co., Ltd.), June 20, 1990 (20. 06. 90), Claim (Family: none) | 1 |
| A | JP, 62-156111, A (Asahi Chemical Industry Co., Ltd.), July 11, 1987 (11. 07. 87), Claim & DE, 3576960, B2 & US, 4690994, A | 1 |
| A | JP, 63-277212, A (Asahi Chemical Industry Co., Ltd.), November 15, 1988 (15. 11. 88), Claim (Family: none) | 1 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| July 24, 1995 (24. 07. 95) | August 15, 1995 (15. 08. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)